# FASCICULE DE BREVET EUROPEEN

(11) **EP 4 356 026 B1**
(45) Date de publication et mention de la délivrance du brevet: **09.04.2025**
(21) Numéro de dépôt: 22732586.7
(22) Date de dépôt: 14.06.2022
(51) Int. Cl.: F16H 61/28, F16H 63/30

(54) **ACTIONNEUR POUR UN SYSTÈME DE TRANSMISSION DE VÉHICULE AUTOMOBILE**
AKTUATOR FÜR EIN KRAFTFAHRZEUGGETRIEBE
ACTUATOR FOR A MOTOR VEHICLE TRANSMISSION SYSTEM

(30) Priorité: 18.06.2021 FR 2106498
(43) Date de publication de la demande: 24.04.2024
(73) Titulaire: Valeo Electrification, 95800 Cergy (FR)
(72) Inventeur: COLOMB, Pierre, 95892 Cergy Pontoise (FR); LANOE, Thierry, 95892 Cergy Pontoise (FR); FAVELIER, Sylvain, 95892 Cergy Pontoise (FR)
(74) Mandataire: Valeo Powertrain Systems
(86) Numéro de dépôt international: PCT/EP2022/066160
(87) Numéro de publication internationale: WO 2022/263441

(56) Documents cités:
- US-A1- 2007 080 039
- US-A1- 2018 038 422
- US-A1- 2020 094 676

## Description

L'invention concerne un actionneur pour un système de transmission d'un véhicule automobile.

L'invention concerne plus particulièrement un actionneur électromagnétique qui est destiné à être logé à l'intérieur d'un carter de transmission de la chaîne de transmission en étant lié à un dispositif d'accouplement.

Le document US 20170159726 A1 divulgue un actionneur électromagnétique pour actionner un dispositif d'accouplement équipant un système différentiel. Le dispositif d'accouplement présente un état désaccouplé dans lequel le différentiel est libre de distribuer un couple provenant d'un moteur vers deux arbres de roue d'un essieu du véhicule et un état accouplé qui désactive la fonction « différentiel » de sorte que les deux arbres de roue ne peuvent pas tourner à des vitesses différentes. L'actionneur électromagnétique comporte un boîtier qui est destiné à être fixé dans un carter de transmission dans lequel est également logé le système de différentiel. Par ailleurs, l'actionneur électromagnétique comporte un boitier présentant un espace annulaire dans lequel sont logés une bobine surmoulée et un piston monté mobile entre une position rétractée et une position déployée. Les différents mouvements du piston entre sa position rétractée, sa position déployée et inversement provoquent des bruits ou chocs en contact avec des pièces métalliques. Les bruits sont particulièrement indésirables pour le confort des passagers du véhicule et les chocs peuvent engendrer des vibrations de l'actionneur et à terme empêcher un bon fonctionnement voire une destruction de l'actionneur.

Le document US 2020094676 A1 divulgue un actionneur pour un système de transmission selon le préambule de la revendication 1.

La présente invention a pour objet une amélioration des solutions actuelles, notamment en proposant un actionneur avec une architecture simple et permettant de réduire les bruits et chocs liés aux mouvements du piston entre sa position rétractée, sa position déployée et inversement.

Plus particulièrement, l'invention concerne un actionneur pour un système de transmission comprenant un boitier définissant un espace annulaire d'axe X dans lequel sont logés un piston annulaire destiné à transmettre un effort d'actionnement à un dispositif d'accouplement, le piston étant disposé de manière coaxiale à l'axe X et étant monté mobile axialement selon l'axe X entre une position rétractée et une position déployée, le boitier comporte une jupe radialement interne, une surface de fond et une jupe radialement externe, une bobine annulaire comprenant un enroulement de fil conducteur, la bobine étant encapsulée par un revêtement, le revêtement forme une extension radiale annulaire définissant une butée de fin de course du piston, le piston est monté mobile dans un logement défini entre la bobine et la jupe interne ou la jupe externe du boitier, l'extension radiale de la bobine s'étendant à l'intérieur de ce logement.

Ainsi, l'actionneur selon l'invention pourra absorber tout ou partie des bruits et chocs du piston lors de ses mouvements grâce à l'extension radiale de la bobine.

Selon l'invention, le revêtement de la bobine annulaire est en matériau polymère par exemple en résine époxy, en polyuréthane ou en polyamide. En d'autres termes, la bobine est surmoulée.

Selon une caractéristique de l'invention, le piston est situé radialement à l'intérieur de la bobine. De manière alternative, le piston peut se situer radialement à l'extérieur de la bobine.

Avantageusement, l'extension radiale définit une butée de fin de course du piston lorsqu'il se trouve en position rétractée. En variante, l'extension radiale définit une butée de fin de course du piston lorsqu'il se trouve en position déployée.

Selon l'invention, le boitier, vu en coupe, est en forme de « U » et est réalisé dans un seul matériau, de préférence un matériau magnétique, par exemple en acier. On entend par un seul matériau le fait que le boitier est monobloc. L'utilisation d'un boitier en un seul matériau permet de simplifier la conception et la fabrication de l'actionneur.

De manière alternative, le boitier, vu en coupe, est en forme de « U » constitué par deux parties en forme de « L » assemblées, les deux parties étant de préférence réalisées dans un matériau magnétique, par exemple en acier. Les deux parties en forme de « L » sont par exemple assemblées par une opération de sertissage, galetage ou emmanchement.

Selon une caractéristique de l'invention, si le piston est situé radialement à l'intérieur de la bobine alors la surface de guidage de piston est la jupe radialement interne. Si le piston est situé radialement à l'extérieur de la bobine alors la surface de guidage de piston est la jupe radialement externe.

La surface de guidage du piston peut être revêtue d'un traitement thermochimique afin de durcir en surface la partie en contact glissant avec le piston et ainsi faciliter le glissement.

De préférence, les surfaces du boitier peuvent être usinées afin d'obtenir un bon état de surface et peuvent également être associées à un traitement de surface, par exemple de type « DLC » qui signifie en anglais « diamond-like carbon » ou carbone sous forme de diamant amorphe en français, « TiN » qui signifie nitrure de titane ou « MOS2 » qui signifie bisulfure de molybdène ou nitruré. Ces traitements permettent d'optimiser les performances tribologiques des surfaces du boitier.

Selon une autre caractéristique de l'invention, le boitier est réalisé en matériau dont le taux de carbone est inférieur à 0.2%, par exemple en acier. Cet acier est ainsi appelé acier bas carbone. Cette caractéristique permet de réduire la masse de l'actionneur.

Selon l'invention, l'extension radiale de la bobine comprend au moins une fente axiale. Cette fente axiale permet une indexation de la bobine sur un outillage afin de faciliter l'opération d'enroulement du fil conducteur.

Selon une caractéristique additionnelle de l'invention, l'extension radiale de la bobine comprend aux moins deux tronçons angulairement espacés par au moins deux fentes axiales.

Selon l'invention, l'espace annulaire du boitier est fermé par un capot magnétique, le capot magnétique définissant une butée de fin de course du piston lorsqu'il se trouve en position déployée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés :
la [Figure 1] illustre un actionneur selon l'invention en vue de face avant ;
la [Figure 2] illustre l'actionneur de la figure 1 en coupe selon l'axe A-A ;
la [Figure 3a] illustre une bobine annulaire de l'actionneur selon un premier mode de réalisation ;
la [Figure 3b] illustre une bobine annulaire de l'actionneur selon un deuxième mode de réalisation ;
la [Figure 4] illustre la bobine annulaire de l'actionneur en vue de face arrière ;
la [Figure 5] illustre une variante de réalisation de l'actionneur ;
la [Figure 6] illustre une vue en perspective du boitier de l'actionneur selon la variante de la figure 5.

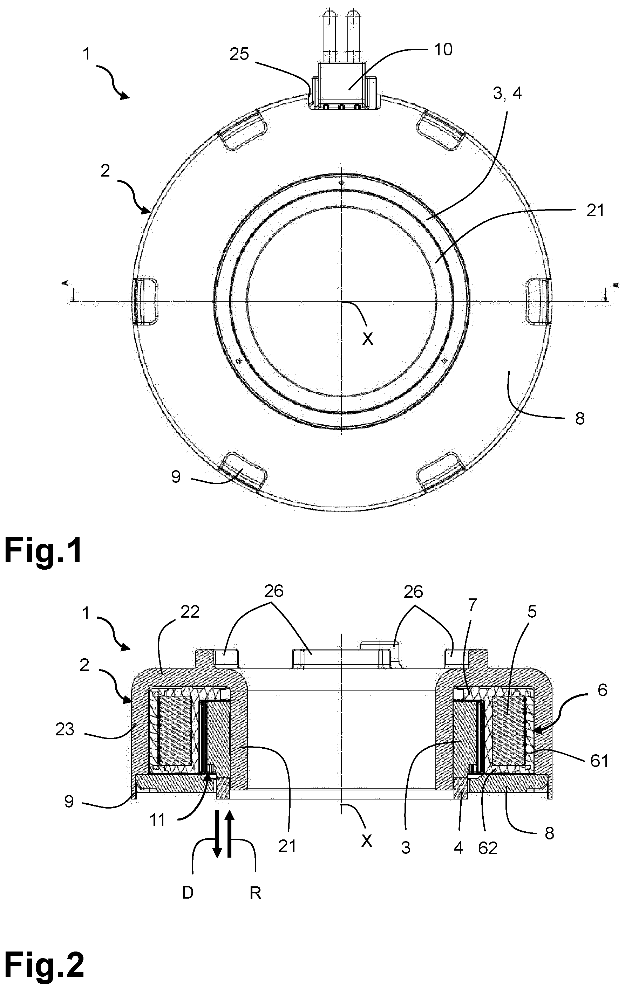

En relation avec la figure 1, on décrit un actionneur 1 selon un mode de réalisation de l'invention qui est apte à être logé dans un carter de transmission. Le carter de transmission peut être constitué par n'importe quel carter de la chaine de transmission d'un véhicule, notamment un carter de différentiel. L'actionneur 1 est ici un actionneur électromagnétique apte à être lié à un dispositif d'accouplement (non représenté) d'une transmission de véhicule automobile. Il comporte un boîtier 2 qui est destiné à être fixé à un carter de transmission (non représenté). Dans ce boitier 2 sont disposés une bobine annulaire 5 ainsi qu'un piston annulaire 3 qui seront décrits en relation avec les figures suivantes.

L'actionneur 1 comporte un connecteur électrique 10 qui est destiné au raccordement de la bobine 5 à un dispositif de commande qui est positionné à l'extérieur du carter. Le connecteur électrique 10 est relié à la bobine 5 par au moins un câble souple et permet d'alimenter électriquement cette bobine 5.

La figure 2 permet de mieux visualiser les éléments constitutifs de l'actionneur 1. L'actionneur 1 comprend ainsi un boitier 2 définissant un espace annulaire d'axe X dans lequel sont logés le piston annulaire 3 destiné à transmettre un effort d'actionnement à un dispositif d'accouplement et la bobine annulaire 5. Le piston 3 est disposé de manière coaxiale à l'axe X et est monté mobile axialement selon l'axe X entre une position rétractée R et une position déployée D. le piston 3 est situé radialement à l'intérieur de la bobine 5.

Dans le mode de réalisation de cette figure 2, le boitier 2 est en forme de « U » et est réalisé dans un seul matériau, de préférence en acier magnétique. Cet acier a un taux de carbone qui est inférieur à 0.2%. Le boitier 2 comporte une jupe radialement interne 21 servant de surface de guidage au piston 3, une surface de fond 22 et une jupe radialement externe 23. Sur la surface de fond 22 du côté externe du boitier 2 se trouvent des excroissances 26 réparties angulairement autour de l'axe X et permettant un contact avec un élément de la transmission, par exemple un roulement. Dans le présent mode de réalisation, quatre excroissances 26 sont présentes.

La bobine annulaire 5 est constituée d'un enroulement de fil conducteur et est encapsulée de manière étanche par un revêtement 6 en matériau polymère par exemple en résine époxy, en polyuréthane ou en polyamide. Le revêtement 6 forme une extension radiale 7 annulaire définissant une butée de fin de course du piston 3 lorsqu'il se trouve en position rétractée R. L'extension radiale 7 se trouve axialement selon l'axe X du côté de la surface de fond 22 du boiter 2. En d'autres termes l'extension radiale 7 est en contact avec la surface de fond 22 du boiter 2.

Le piston 3 est monté mobile dans un logement 11 défini entre la bobine 5 et la jupe interne 21 du boitier 2. L'extension radiale 7 de la bobine 5 s'étend à l'intérieur de ce logement 11. L'extension radiale 7 s'étend radialement en direction de l'axe X.

L'espace annulaire du boitier 2 est fermé par un capot magnétique 8, le capot magnétique 8 définit une butée de fin de course du piston 3 lorsque le piston 3 se trouve en position déployée D. Le capot magnétique 8 est fixé au boitier 2 par l'intermédiaire de languettes 9 appartenant à la jupe externe 23 du boitier 2. Ces languettes 9 sont rabattues en direction du capot magnétique 8 lors de l'assemblage. Le piston 3 comporte un épaulement destiné à venir en butée contre un épaulement du capot magnétique 8 lorsque la piston 3 est en position déployée D.

Le piston 3 est en matériau ferromagnétique, tel que du fer ou de l'acier par exemple. Le piston 3 comporte en outre un embout 4 amagnétique, également de forme annulaire, qui est fixé au piston 3 et par lequel l'effort d'actionnement est transmis au dispositif d'accouplement. Amagnétique signifie un matériau ayant une absence de propriété magnétique. L'embout 4 amagnétique du piston 3 permet ainsi d'éviter des fuites indésirables de flux magnétiques vers les autres composant du dispositif d'accouplement. L'embout amagnétique 4 est par exemple en bronze ou en aluminium.

Lorsque que l'actionneur 1 se trouve dans un carter de différentiel, comme dans la présente invention, cet actionneur 1 se retrouve partiellement immergé dans un fluide hydraulique, tel que de l'huile. Cette huile permet de lubrifier les éléments en contact dans le carter de différentiel mais aussi de limiter les échauffements. Dans le cas de la présente invention, il est particulièrement utile de tirer profit de cet environnement humide afin de lubrifier et refroidir les éléments constitutifs de l'actionneur 1. A cet effet, le boitier 2 comprend une ouverture 25 située dans la jupe radialement externe 23, cette ouverture 25 permet le passage du fluide de l'extérieur à l'intérieur du boitier 2. Cette ouverture permet également le passage du connecteur électrique 10 de la bobine 5. Afin de conduire le fluide à l'intérieur du boitier 2, il existe au moins un moyen de guidage d'un fluide 12a, 12b, 14a, 14b, 24 prévu entre le boitier 2 et le revêtement 6 de la bobine 5.

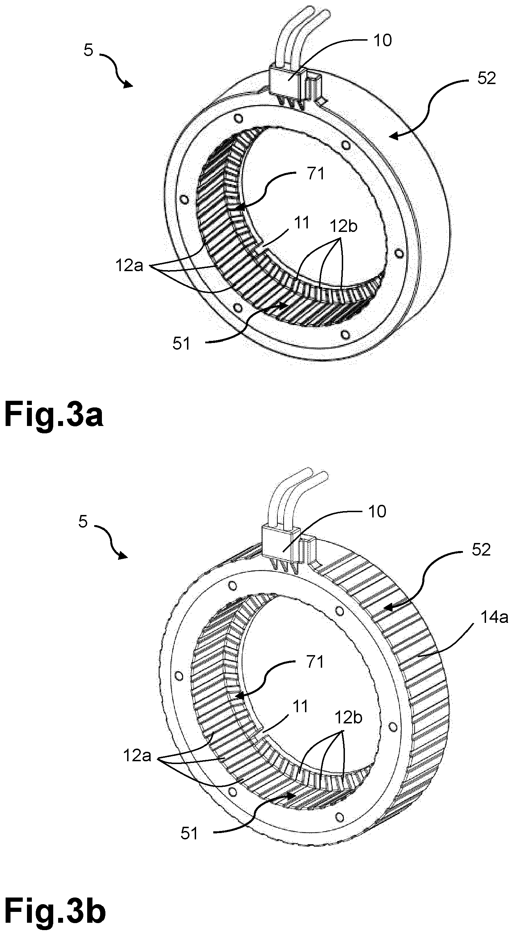

La figure 3a montre un premier moyen de guidage de ce fluide. En effet, la surface interne 51 du revêtement 6 de la bobine 5 est pourvue de rainures 12a permettant le guidage d'un fluide entre le revêtement 6 de la bobine 5 et le piston 3. Ces rainures 12a sont réparties angulairement et à intervalle régulier sur tout le pourtour de la surface interne 51 de la bobine 5. Ces rainures 12a s'étendent axialement selon l'axe X. La surface 71 de l'extension radiale 7 en vis-à-vis avec le piston 3 est également pourvue de rainures 12b permettant le guidage du fluide. Ces rainures 12b sont réparties angulairement et à intervalle régulier sur tout le pourtour de l'extension radiale 7 de la bobine 5 en vis-à-vis avec le piston 3. Ces rainures 12b s'étendent perpendiculairement aux rainures 12a. Les rainures 12a et 12b forment ainsi une rainure continue. Les rainures 12b ont une direction qui converge vers un point situé sur l'axe X.

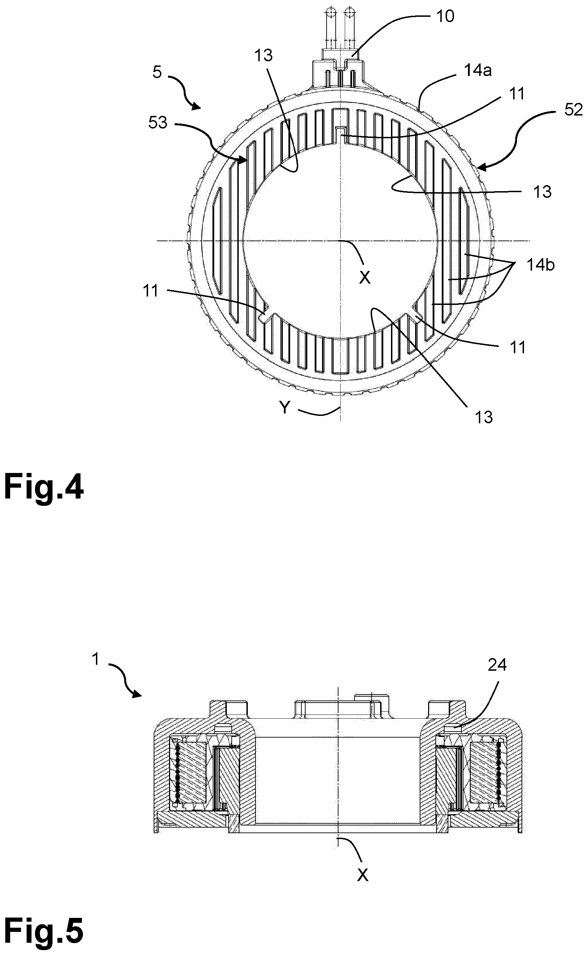

L'extension radiale 7 de la bobine 5 comprend au moins une fente axiale 11. Cette fente axiale 11 sépare deux tronçons 13. Selon le mode de réalisation visible en figure 4, il existe trois tronçons 13 séparés par trois fentes axiales 11. Cette fente axiale 11 permet une indexation de la bobine 5 sur un outillage afin de faciliter l'opération d'enroulement du fil conducteur.

Le mode de réalisation de la bobine 5 visible sur la figure 3b est une variante de réalisation du mode de réalisation visible sur la figure 3a. Les caractéristiques identiques entres les deux modes portent les mêmes références numériques. A la différence de la figure 3a, la figure 3b montre la surface externe 52 du revêtement 6 de la bobine 5 pourvue de rainures 14a. Ces rainures 14a sont en vis-à-vis avec la jupe radialement externe 23 du boitier 2 et permettent l'écoulement du fluide entre le boitier 2 et la bobine 5. Ces rainures 14a sont réparties angulairement et à intervalle régulier sur tout le pourtour de la surface externe 52 de la bobine 5. Ces rainures 14a s'étendent axialement selon l'axe X.

Bien entendu, il est également possible tout en restant dans le périmètre de la présente invention de proposer une bobine 5 ayant seulement des rainures sur la surface externe 52 du revêtement de la bobine 5 sans avoir de rainures sur la surface interne 51 ni sur l'extension radiale 7.

Les rainures 12a, 12b, 14a, 14b ont également pour fonction de participer au renforcement de la tenue mécanique du surmoulage de la bobine 5.

La figure 4 montre la surface 53 du revêtement 6 de la bobine 5 faisant face à la surface de fond 22 du boitier 2. Cette surface 53 possède des rainures 14b permettant un guidage du fluide entre le revêtement 6 de la bobine 5 et la surface de fond 22 du boitier 2. Ces rainures 14b s'étendent parallèlement à un axe Y orthogonal à l'axe X.

La figure 5 représente une variante de réalisation du boitier 2. Dans ce mode de réalisation, la surface de fond 22 du boitier 2 comprend une rainure annulaire 24 en vis-à-vis avec la surface 53 du revêtement 6 de la bobine 5. Une seule rainure 24 est représentée mais il est tout à fait possible de réaliser plusieurs rainures 24 concentriques.

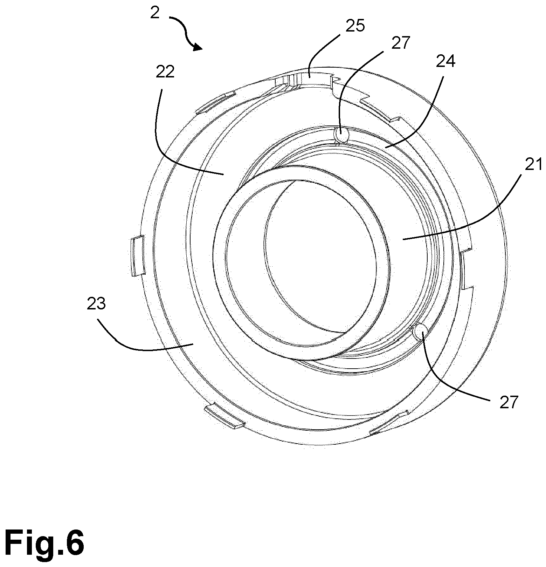

La figure 6 permet de visualiser grâce à une vue en perspective cette rainure 24 disposée sur la surface de fond 22 du boitier 2. Cette rainure 24 est concentrique à l'axe X et est radialement proche de la jupe radialement interne 21 du boitier 2. Au moins une ouverture 27 est prévue dans cette rainure 24 afin de laisser circuler le fluide entre l'extérieur et l'intérieur du boitier 2 et inversement. Dans le cas présent, trois ouvertures 27 sont prévues dans la rainure 24. De manière plus générale, l'ouverture 27 est prévue sur la surface de fond 22 du boitier 2.

Le fonctionnement de l'actionneur 1 va maintenant être décrit. Lorsque la bobine 5 est mise sous tension avec une intensité supérieure à une intensité seuil, cela permet de déplacer le piston 3 de la position rétractée R vers la position déployée D. Lorsque le piston 3 est en position déployée D, le capot magnétique 8 exerce une attraction sur le piston 3, ce qui permet de le maintenir en position déployée D. L'intensité d'alimentation de la bobine 5 peut alors être diminuée tant qu'elle reste supérieure à ladite intensité seuil. Lorsque la bobine 5 est mise hors-tension ou qu'elle est alimentée avec une intensité inférieure à l'intensité seuil, un moyen de rappel élastique (non représenté) rappelle le dispositif d'accouplement vers la position désaccouplée ce qui permet de contrer la force d'attraction entre le capot magnétique 8 et le piston 3 et renvoie le piston 3 de la position déployée D vers la position rétractée R.

Le cheminement du fluide à l'intérieur de l'actionneur 1 va maintenant être décrit. Le fluide entre à l'intérieur de l'actionneur 1 par l'ouverture 25 et est guidé par la surface externe 52 de la bobine 5 (par l'intermédiaire des rainures 14a quand elles sont présentes) vers la surface de fond du boitier 2. Ensuite, les rainures 14b guident le fluide le long de la surface de fond du boitier 2. Quand la rainure 24 existe, cette rainure 24 participe au guidage du fluide entre la bobine 5 et le boitier 2. Le fluide passe ensuite dans le passage situé entre l'extension radiale 7 et la jupe radialement interne 21 du boitier 2. Le fluide est alors dans le logement 11 dans lequel se trouve le piston 3. Le fluide est alors guidé dans ce logement 11 par les rainures 12a qui sont situées sur la surface interne 51 de la bobine. Lorsque le fluide est dans logement 11, il participe à la lubrification des surfaces de contact entre le piston 3 et la jupe radialement interne 21 du boitier 2. Le fluide participe également à un amortissement hydraulique lorsque le piston 3 se retrouve en fin de course, que ce soit en position déployée D ou en position rétractée R. Le fluide est ensuite évacué de l'actionneur 1 par le passage situé entre le capot magnétique 8 et la jupe radialement interne 21 du boitier 2 ou bien par l'ouverture 27.

De manière générale, la largeur des rainures 12a, 12b, 14a, 14b, 24 est comprise entre 1mm et 5mm, de préférence 2mm. La profondeur des rainures 12a, 12b, 14a, 14b, 24 est comprise entre 1mm et 3mm.

De manière générale, les rainures 12a, 12b, 14a, 14b, 24 ont également pour fonction de participer à la filtration du fluide lors de son cheminement à l'intérieur de l'actionneur 1.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, défini par les revendications.

Dans les revendications, tout signe de référence entre parenthèses ne saurait être interprété comme une limitation de la revendication.

## Revendications

1. Actionneur (1) pour un système de transmission comprenant un boitier (2) définissant un espace annulaire d'axe X dans lequel sont logés un piston annulaire (3) destiné à transmettre un effort d'actionnement à un dispositif d'accouplement, le piston (3) étant disposé de manière coaxiale à l'axe X et étant monté mobile axialement selon l'axe X entre une position rétractée (R) et une position déployée (D), le boitier (2) comporte une jupe radialement interne (21), une surface de fond (22) et une jupe radialement externe (23), une bobine annulaire (5) comprenant un enroulement de fil conducteur, la bobine (5) étant encapsulée par un revêtement (6), le revêtement (6) forme une extension radiale (7) annulaire définissant une butée de fin de course du piston (3), **caractérisé en ce que** le piston (3) est monté mobile dans un logement (11) défini entre la bobine (5) et la jupe interne (21) ou la jupe externe (23) du boitier (2), l'extension radiale (7) de la bobine (5) s'étendant à l'intérieur de ce logement (11).

2. Actionneur (1) selon la revendication 1 **caractérisé en ce que**, vu en coupe, le boitier (2) est en forme de « U » et est réalisé dans un seul matériau, de préférence un matériau magnétique.

3. Actionneur (1) selon la revendication 1 **caractérisé en ce que**, vu en coupe, le boitier (2) est en forme de « U » constitué par deux parties en forme de « L » assemblées, les deux parties étant de préférence réalisées dans un matériau magnétique.

4. Actionneur (1) selon l'une des revendications précédentes **caractérisé en ce que** le boitier (2) est réalisé en matériau dont le taux de carbone est inférieur à 0.2%.

5. Actionneur (1) selon l'une des revendications précédentes **caractérisé en ce que** l'extension radiale (7) de la bobine (5) comprend au moins une fente axiale (11).

6. Actionneur (1) selon l'une des revendications précédentes **caractérisé en ce que** l'extension radiale (7) de la bobine (5) comprend aux moins deux tronçons (13) angulairement espacés par au moins deux fentes axiales (11).

7. Actionneur (1) selon l'une des revendications précédentes **caractérisé en ce que** l'espace annulaire du boitier (2) est fermé par un capot magnétique (8), le capot magnétique (8) définissant une butée de fin de course du piston (3) lorsqu'il se trouve en position déployée (D).

## Patentansprüche

1. Aktuator (1) für ein Getriebe, beinhaltend ein Gehäuse (2), das einen ringförmigen Raum mit einer X-Achse definiert, der Folgendes aufnimmt: einen ringförmigen Kolben (3), der dazu bestimmt ist, eine Betätigungskraft auf eine Kupplungsvorrichtung zu übertragen, wobei der Kolben (3) koaxial zu der X-Achse angeordnet ist und entlang der X-Achse zwischen einer eingefahrenen Stellung (R) und einer ausgefahrenen Stellung (D) beweglich montiert ist, wobei das Gehäuse (2) eine radial innenliegende Schürze (21) umfasst, eine Bodenfläche (22) und eine radial außenliegende Schürze (23), eine ringförmige Spule (5), die eine Wicklung aus Leitungsdraht beinhaltet, wobei die Spule (5) durch eine Beschichtung (6) verkapselt ist, wobei die Beschichtung (6) eine ringförmige radiale Erweiterung (7) bildet, die einen Endanschlag des Kolbens (3) definiert, **dadurch gekennzeichnet, dass** der Kolben (3) in einer Aufnahme (11), die zwischen der Spule (5) und der innenliegenden Schürze (21) oder der außenliegenden Schürze (23) des Gehäuses (2) definiert ist, beweglich montiert ist, wobei sich die radiale Erweiterung (7) der Spule (5) im Inneren dieser Aufnahme (11) erstreckt.

2. Aktuator (1) nach Anspruch 1, **dadurch gekennzeichnet, dass** das Gehäuse (2) im Querschnitt gesehen eine "U"-Form aufweist und aus einem einzigen Material, vorzugweise einem magnetischen Material, hergestellt ist.

3. Aktuator (1) nach Anspruch 1, **dadurch gekennzeichnet, dass** das Gehäuse (2) im Querschnitt gesehen eine "U"-Form aufweist, die aus zwei zusammengefügten "L"-förmigen Teilen besteht, wobei die zwei Teile vorzugsweise aus einem magnetischen Material hergestellt sind.

4. Aktuator (1) nach einem der vorhergehenden Ansprüche, **dadurch gekennzeichnet, dass** das Gehäuse (2) aus einem Material hergestellt ist, dessen Kohlenstoffgehalt weniger als 0,2 % beträgt.

5. Aktuator (1) nach einem der vorhergehenden Ansprüche, **dadurch gekennzeichnet, dass** die radiale Erweiterung (7) der Spule (5) mindestens einen axialen Schlitz (11) beinhaltet.

6. Aktuator (1) nach einem der vorhergehenden Ansprüche, **dadurch gekennzeichnet, dass** die radiale Erweiterung (7) der Spule (5) mindestens zwei Teilstücke (13) beinhaltet, die durch mindestens zwei axiale Schlitze (11) winkelig voneinander beabstandet sind.

7. Aktuator (1) nach einem der vorhergehenden Ansprüche, **dadurch gekennzeichnet, dass** der ringförmige Raum des Gehäuses (2) durch eine magnetische Kappe (8) verschlossen ist, wobei die magnetische Kappe (8) einen Endanschlag für den Kolben (3) definiert, wenn sich dieser in der ausgefahrenen Stellung (D) befindet.

## Claims

1. Actuator (1) for a transmission system comprising a housing (2) defining an annular space of axis X in which there are housed an annular piston (3) intended to transmit an actuating force to a coupling device, the piston (3) being disposed coaxially with the axis X and being mounted so as to be axially movable along the axis X between a retracted position (R) and a deployed position (D), the housing (2) comprising a radially inner skirt (21), a bottom surface (22) and a radially outer skirt (23), an annular coil (5) comprising a winding of conductive wire, the coil (5) being encapsulated by a coating (6), the coating (6) forming an annular radial extension (7) defining an end-of-travel stop for the piston (3), **characterized in that** the piston (3) is mounted movably in a receptacle (11) defined between the coil (5) and the inner skirt (21) or the outer skirt (23) of the housing (2), the radial extension (7) of the coil (5) extending inside this receptacle (11).

2. Actuator (1) according to Claim 1, **characterized in that**, seen in section, the housing (2) is in the shape of a "U" and is produced from a single material, preferably a magnetic material.

3. Actuator (1) according to Claim 1, **characterized in that**, seen in section, the housing (2) is in the shape of a "U" constituted by two assembled "L"-shaped parts, the two parts preferably being produced from a magnetic material.

4. Actuator (1) according to one of the preceding claims, **characterized in that** the housing (2) is produced from material whose carbon content is less than 0.2%.

5. Actuator (1) according to one of the preceding claims, **characterized in that** the radial extension (7) of the coil (5) comprises at least one axial slot (11).

6. Actuator (1) according to one of the preceding claims, **characterized in that** the radial extension (7) of the coil (5) comprises at least two portions (13) that are angularly spaced apart by at least two axial slots (11).

7. Actuator (1) according to one of the preceding claims, **characterized in that** the annular space of the housing (2) is closed by a magnetic cap (8), the magnetic cap (8) defining an end-of-travel stop for the piston (3) when it is in the deployed position (D).
